# EUROPEAN PATENT SPECIFICATION

(11) **EP 4 078 928 B1**
(45) Date of publication and mention of the grant of the patent: **24.09.2025**
(21) Application number: 20821290.2
(22) Date of filing: 15.12.2020
(51) Int. Cl.: H04L 9/40, H04L 9/00

(54) **METHOD AND COMPUTER SYSTEM FOR PROVABLE FILE TRANSFER**
VERFAHREN UND COMPUTERSYSTEM FÜR NACHWEISBAREN DATEITRANSFER
PROCÉDÉ ET SYSTÈME INFORMATIQUE DE TRANSFERT DE FICHIER POUVANT ÊTRE PROUVÉ

(30) Priority: 19.12.2019 CH 16722019
(43) Date of publication of application: 26.10.2022
(73) Proprietor: Swiss Cyber Gate AG, 8640 Rapperswil (CH)
(72) Inventor: KESSLER, Oliver, 8905 Islisberg (CH); ELLENBERGER, Thomas, 8008 Zurich (CH)
(74) Representative: Rentsch Partner AG
(86) International application number: PCT/EP2020/086219
(87) International publication number: WO 2021/122596

(56) References cited:
- WO-A1-2019/144400
- CN-A- 108 566 395
- US-A1- 2019 057 115
- LILIAN KASEM: "Using Blockchain To Securely Transfer And Verify Files", 30 July 2019 (2019-07-30), XP055775663, Retrieved from the Internet <URL:https://devblogs.microsoft.com/cse/2019/07/30/using-blockchain-to-securely-transfer-and-verify-files/> [retrieved on 20210212]
- ANONYMOUS: "File Transfer Logging & Security", 23 May 2012 (2012-05-23), pages 1 - 2, XP055775661, Retrieved from the Internet <URL:https://superuser.com/questions/427713/file-transfer-logging-security> [retrieved on 20210212]

## Description

### Field of the Invention

The present invention relates to a computer-implemented method and a computer system for provable file transfer. Specifically, the present invention relates to a computer-implemented method and a computer system for transferring provably a file from a sender to a recipient. Document US2019/057115 discloses a method and a system for distributing digital content.

### Background of the Invention

There are virtually endless numbers of applications scenarios involving the transfer of data files from a sender via a communication network to a recipient, particularly a transfer of data files over the Internet. In at least some of these applications or scenarios it would be advantageous, if not necessary, to be able to prove after the fact that a particular data file was indeed transferred from a particular sender to a particular recipient.

### Summary of the Invention

It is an object of this invention to provide a computer-implemented method and a computer system for transferring provably a file from a sender to a recipient, which computer-implemented method and a computer system do not have at least some of the disadvantages of the prior art.

According to the present invention, these objects are achieved through the features of the independent claims. In addition, further advantageous embodiments follow from the dependent claims and the description.

According to the present invention, the above-mentioned objects are particularly achieved in that a computer-implemented method of transferring provably a file from a sender to a recipient comprises a computer system performing the steps: receiving via a communication network from a communication device of the sender the file and an indication of a recipient; generating a sender record, using the file and sender identification data; submitting the sender record to a blockchain system for storing the sender record on the blockchain in a first blockchain record having a first blockchain transaction identifier; transmitting via the communication network a file transfer notification to the recipient; transmitting the file via the communication network to a communication device of the recipient, responsive to receiving from the communication device of the recipient a file download request related to the file transfer notification; generating a recipient record, using the file, recipient identification data, and the first blockchain transaction identifier; submitting the recipient record to the blockchain system for storing the recipient record on the blockchain in a second blockchain record having a second blockchain transaction identifier; and storing a file transfer log, the file transfer log comprising file data of the file, the sender identification data, the sender record, the recipient identification data, and the recipient record linked to the first blockchain transaction identifier and to the second blockchain transaction identifier.

In an embodiment, the method further comprises the computer system generating a unique file transfer identifier, using the unique file transfer identifier for generating the sender record and for generating the recipient record, and storing the unique file transfer identifier in the file transfer log linked to the first blockchain transaction identifier and to the second blockchain transaction identifier.

In an embodiment, the method further comprises the computer system generating a proof of transfer of the file by retrieving the file transfer log for the file, and including in the proof of transfer the file data, the sender identification data for generating the sender record, the first blockchain transaction identifier for verifying the sending of the file by the sender using the sender record stored in the first blockchain record with the first blockchain transaction identifier, the recipient identification data for generating the recipient record, and the second blockchain transaction identifier for verifying the receiving of the file by the recipient using the recipient record stored in the second blockchain record with the second blockchain transaction identifier.

In an embodiment, the method further comprises the computer system generating an anonymized sender identifier linked on the computer system to the sender identification data, and including the anonymized sender identifier in the sender record for storing the anonymized sender identifier in the first blockchain record.

In an embodiment, the method further comprises the computer system generating an anonymized recipient identifier linked on the computer system to the recipient identification data, and including the anonymized recipient identifier in the sender record for storing the anonymized recipient identifier in the first blockchain record and/or in the recipient record for storing the anonymized recipient identifier in the second blockchain record.

In an embodiment, submitting the sender record to the blockchain system and submitting the recipient record to the blockchain system comprises the computer system invoking a smart contract of the blockchain system.

In an embodiment, generating the sender record comprises the computer system generating a file checksum by applying a hash function to the file, generating a sender identifier hash from the sender identification data, and including the file checksum and the sender identifier hash in the sender record; and generating the recipient record comprises the computer system generating a recipient identifier hash from the recipient identification data, and including the file checksum and the recipient identifier hash in the recipient record.

In an embodiment, the recipient identification data comprises: an electronic mail address of the recipient, a mobile telephone number of the recipient, a user name and associated password of the recipient, a transaction authentication number assigned to the recipient, and/or a unique hyperlink assigned to the recipient; and the sender identification data comprises: an electronic mail address of the sender, a mobile telephone number of the sender, a user name and associated password of the sender, a transaction authentication number assigned to the sender, and/or a unique hyperlink assigned to the sender.

In addition to the computer-implemented method of transferring provably a file from a sender to a recipient, the present invention also relates to a computer system for transferring provably a file from a sender to a recipient. The computer system comprises a processor configured to perform the steps: receiving via a communication network from a communication device of the sender the file and an indication of a recipient; generating a sender record, using the file and sender identification data; submitting the sender record to a blockchain system for storing the sender record on the blockchain in a first blockchain record having a first blockchain transaction identifier; transmitting via the communication network a file transfer notification to the recipient; transmitting the file via the communication network to a communication device of the recipient, responsive to receiving from the communication device of the recipient a file download request related to the file transfer notification; generating a recipient record, using the file, recipient identification data, and the first blockchain transaction identifier; submitting the recipient record to the blockchain system for storing the recipient record on the blockchain in a second blockchain record having a second blockchain transaction identifier; and storing a file transfer log, the file transfer log comprising file data of the file, the sender identification data, the sender record, the recipient identification data, and the recipient record linked to the first blockchain transaction identifier and to the second blockchain transaction identifier.

In an embodiment, the processor is further configured to generate a unique file transfer identifier, use the unique file transfer identifier for generating the sender record and for generating the recipient record, and store the unique file transfer identifier in the file transfer log linked to the first blockchain transaction identifier and to the second blockchain transaction identifier.

In an embodiment, the processor is further configured to generate a proof of transfer of the file by retrieving the file transfer log for the file, and including in the proof of transfer the file data, the sender identification data for generating the sender record, the first blockchain transaction identifier for verifying the sending of the file by the sender using the sender record stored in the first blockchain record with the first blockchain transaction identifier, the recipient identification data for generating the recipient record, and the second blockchain transaction identifier for verifying the receiving of the file by the recipient using the recipient record stored in the second blockchain record with the second blockchain transaction identifier.

In an embodiment, the processor is further configured to generate an anonymized sender identifier linked on the computer system to the sender identification data, include the anonymized sender identifier in the sender record for storing the anonymized sender identifier in the first blockchain record, generate an anonymized recipient identifier linked on the computer system to the recipient identification data, and include the anonymized recipient identifier in the sender record for storing the anonymized recipient identifier in the first blockchain record and/or in the recipient record for storing the anonymized recipient identifier in the second blockchain record.

In an embodiment, the processor is further configured to submit the sender record to the blockchain system and to submit the recipient record to the blockchain system by invoking a smart contract of the blockchain system.

In an embodiment, the processor is further configured to generate the sender record by generating a file checksum by applying a hash function to the file, generating a sender identifier hash from the sender identification data, and including the file checksum and the sender identifier hash in the sender record; and to generate the recipient record by generating a recipient identifier hash from the recipient identification data, and including the file checksum and the recipient identifier hash in the recipient record.

In addition to the computer-implemented method and the computer system for transferring provably a file from a sender to a recipient, the present invention also relates to a computer program product. The computer program product comprises a non-transitory computer-readable medium having stored thereon computer program code configured to control a processor of a computer system such that the computer system transfers provably a file from a sender to a recipient by performing the above-described method of transferring provably a file from a sender to a recipient.

### Brief Description of the Drawings

The present invention will be explained in more detail, by way of example, with reference to the drawings in which:
- Figure 1:: shows a combined flow and block diagram illustrating schematically a computer system and a computer-implemented method for transferring provably a file from a sender to a recipient.
- Figure 2:: shows a schematic tree diagram illustrating data elements and data records for implementing a provable transfer of a file from a sender to a recipient.

### Detailed Description of the Preferred Embodiments

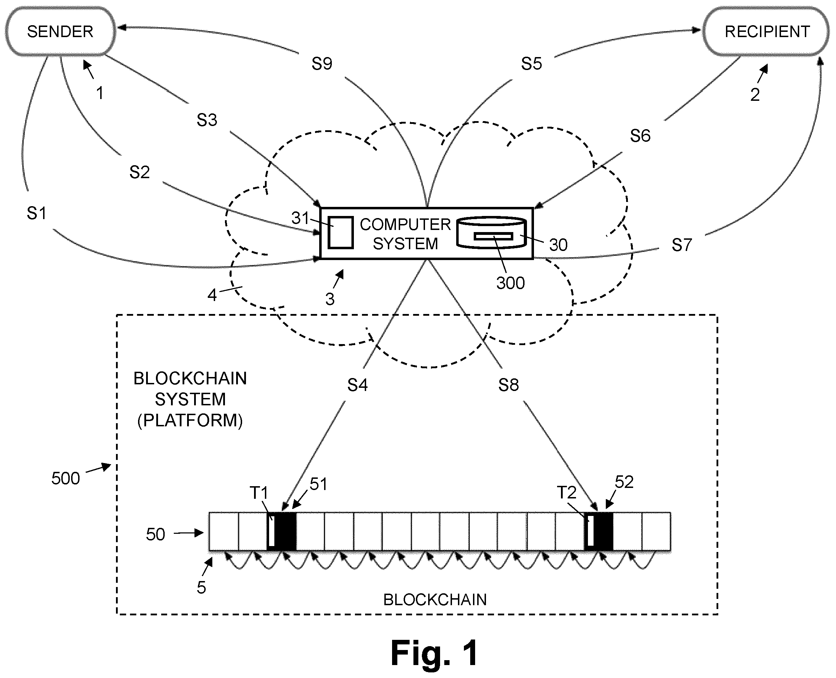

In Figure 1, reference numeral 3 refers to a computer system. The computer system 3 comprises one or more computers having one or more processors 31. In an embodiment, the computer system 3 is a cloud-based computer system. As illustrated in Figure 1, the computer system 3 comprises a data store 30 for storing data, described below in more details. The one or more processors 31 of the computer system 3 are configured to perform various functions described below in more detail. More specifically, the one or more processors 31 of the computer system 3 are controlled by computer program code, stored on a non-transitory computer-readable medium, such that the computer system 3 performs the afore-mentioned functions.

Reference numeral 4 refers to a communication network. The communication network 4 comprises fixed and/or mobile communication networks, e.g. the Internet and communication networks for accessing the Internet, e.g. mobile radio communication networks, such as GSM (Global System for Mobile Communication), UMTS (Universal Mobile Telephone System), 5G-networks, LAN (Local Area Networks), and/or WLAN (Wireless Local Area Networks).

Reference numeral 5 refers to a blockchain stored on a blockchain system 500 (also referred to as "blockchain platform") implemented on a plurality of (distributed) computers (nodes) connected to the communication network 4. The blockchain system or blockchain platform 500 implements a permissioned or a permission-less blockchain. For example, the blockchain system 500 is an Ethereum, EOS, or NEO blockchain platform. As illustrated in Figure 1, the blockchain 5 comprises a plurality of blocks 50, which are sequentially arranged in a chain of consecutive blocks 50 and cryptographically linked in that each block 50 contains a cryptographic hash of the preceding (previous) block 50 on the blockchain 5. Each block 50 of the blockchain 5 comprises a plurality of blockchain records 51, 52. Each blockchain record 51, 52 corresponds to a transaction and comprises a respective blockchain transaction identifier T1, T2.

In Figure 1, reference numerals 1 and 2 refer to a sender or a recipient, respectively. The sender 1 and recipient 2 comprise computerized communication devices for communication with the computer system 3 via the communication network 4. For example, the computerized communication devices are mobile phones, laptop computers, desktop computers, tablet computers, smart watches, and/or other computing devices configured for data communication via communication network 4.

In the following paragraphs, described with reference to Figure 1 are possible sequences of steps performed by the computer system 3 or its processor(s) 31, respectively, for transferring provably a data file from the sender 1 to the recipient 2, i.e. from the computerized communication device of the sender 1 to the computerized communication device of the recipient 2.

In step S1, the computer system 3 or its processor 31, respectively, receives via the communication network 4 from the sender 1 or its computerized communication device, respectively, sender identification data. Depending on the scenario or embodiment, the sender identification data comprises an electronic mail address of the sender 1, a mobile telephone number of the sender 1, a user name and associated password of the sender 1, a transaction authentication number assigned to the sender 1, and/or a unique hyperlink assigned to the sender 1. The password of the sender 1 may be supplemented by two factor authentication codes and/or replaced or supplemented with biometric data obtained from the sender 1. For example, the sender identification data is received via a web frontend associated with a website linked to or hosted on the computer system 3. Using the sender identification data, the computer system 3 identifies and authenticates the sender 1.

In step S2, the computer system 3 or its processor 31, respectively, receives via the communication network 4 from the sender 1 or its computerized communication device, respectively, the data file to be uploaded and subsequently transferred to one or more recipients (2). For upload verification, a checksum of the file is computed locally at the sender side, i.e. at the computerized communication device of the sender 1, e.g. in the web frontend, and at the platform side, e.g. by the computer system 3 or its processor 31, respectively, after the upload of the file has finished.

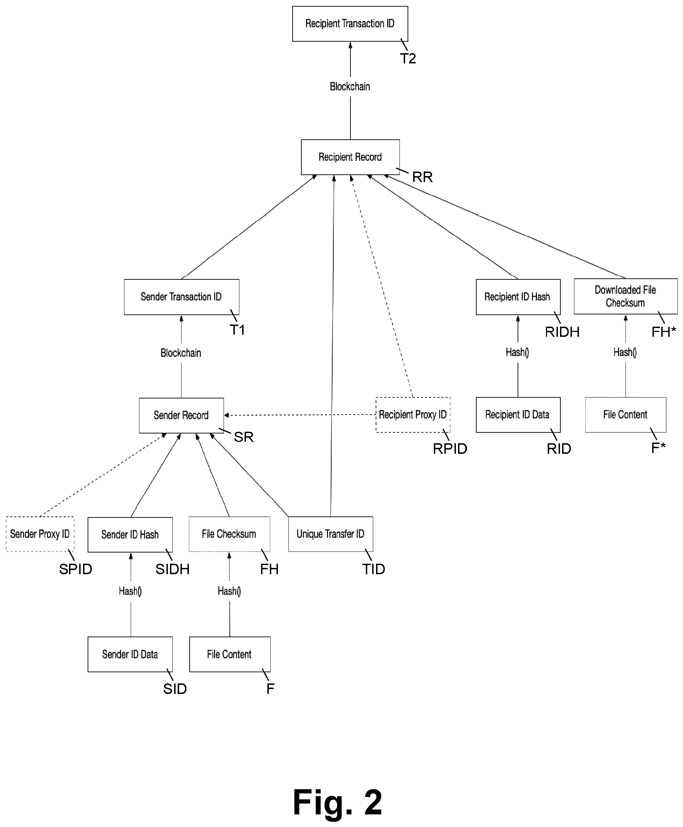

Upon positive verification of the two checksums, successful upload is established and the checksum is stored in the data store 30 in a file transfer log 300 for the respective data file, which was uploaded and is to be transferred. In an embodiment the checksum FH of the data file or its file content F, respectively, is computed as a hash, using a cryptographic one-way function, as illustrated in Figure 2. In an embodiment, in addition to the checksum further file data of the respective data file is stored in the file transfer log 300 for the respective data file, e.g. file name, file size, and other characteristic data of the data file. Furthermore, a time stamp, indicative of date and time of the successful file upload, is stored in the file transfer log 300 for the respective data file.

In an embodiment, the computer system 3 or its processor 31, respectively, further generates and stores in the file transfer log 300 for the respective data file (to be transferred) a unique file transfer identifier TID. In essence, the unique file transfer identifier TID is used to identify a particular file transfer process of a particular data file from a particular sender 1 to a particular recipient 2.

In step S3, the computer system 3 or its processor 31, respectively, receives via the communication network 4 from the sender 1 or its computerized communication device, respectively, an indication of a recipient, i.e. a selection and/or specification of the recipient of the data file. For example, the selection or specification of the recipient is received from the sender via the web frontend associated with a website linked to or hosted on the computer system 3. The recipient is selected from an existing directory of recipients or created as a new recipient. For example, a new recipient is defined by the sender 1 indicating and submitting recipient identification data such as an email address of the recipient 2, a mobile telephone number of the recipient 2, other identifiers of the recipient 2, e.g. identifiers or user names from messaging services such as WhatsApp or Threema, etc., and/or a transaction authentication number assigned to the recipient 2. At this point in time or at a later phase, the computer system 3 or its processor 31, respectively, generates a proxy identifier for the specified recipient 2, e.g. a unique alphanumeric string assigned to the recipient selected or defined by the sender 1. Essentially, the recipient proxy identifier is an anonymized identifier linked on the computer system 3 to the recipient 2 or the respective recipient identification data, respectively. In an embodiment, the computer system 3 or its processor 31, respectively, generates for the recipient 2 a unique hyperlink which can be used by the recipient 2 to access, e.g. via a web browser, the data file submitted by the sender 1 for transmission to the recipient 2. In an embodiment, this unique hyperlink is further used as recipient identification data and/or as the proxy identifier for the recipient 2. In an embodiment, the computer system 3 or its processor 31, respectively, generates a unique transfer object which includes and/or links a unique file transfer identifier TID, the data file to be transferred, the sender identification data, and the recipient identification data available at this stage.

In step S4, the computer system 3 or its processor 31, respectively, generates a sender record SR for storage as a blockchain record 51 on the blockchain 5. As illustrated in Figure 2, the sender record SR is generated based on the file content F of the data file and sender identification data associated with the sender 1. More specifically, the sender record SR comprises a sender identifier hash SIDH and the checksum FH of the file content F of the data file. The sender identifier hash SIDH is generated by the computer system 3 or its processor 31, respectively, from the sender identification data using a cryptographic one-way function (cryptographic hash function), as illustrated in Figure 2. Optionally, the sender record SR further comprises a sender proxy identifier SPID. The sender proxy identifier SPID for the sender 1, e.g. a unique alphanumeric string assigned to the sender identification data of the sender 1, is generated by the computer system 3 or its processor 31, respectively. Essentially, the sender proxy identifier SPID is an anonymized identifier linked on the computer system 3 to the sender 1 or the respective sender identification data, respectively. In an embodiment, the sender record SR further comprises the recipient proxy identifier RPID of the recipient 2. In an embodiment, the sender record SR further comprises the unique file transfer identifier TID for the respective data file. The computer system 3 or its processor 31, respectively, submits the sender record SR to the blockchain system 500 for storage on the blockchain 5. The computer system 3 or its processor 31, respectively, uses an interface of the blockchain system 500, e.g. an API (application programming interface), to submit the sender record SR for storage on the blockchain 5. Depending on the type of blockchain system 500 used, submitting the sender record SR to the blockchain system 500 for storage on the blockchain 5 may invoke a smart contract of the blockchain 5 which generates a transaction and stores the sender record SR on the blockchain 5. As illustrated schematically in Figure 2, the sender record SR is stored on the blockchain 5, in a block 50 of the blockchain 5, as a blockchain record 51, having blockchain transaction identifier T1 .

Upon successful storage of the sender record SR on the blockchain 5, the computer system 3 or its processor 31, respectively, receives the respective blockchain transaction identifier T1 from the blockchain system 500. The received blockchain transaction identifier T1 is stored as a sender transaction identifier in the data store 30 in the file transfer log 300 for the respective data file to be transferred. More specifically, the sender transaction identifier, the sender identification data SID, and the sender record SR, are stored in the file transfer log 300 for the respective data file, linked to the previously stored file data of the respective data file (e.g. including the unique file transfer identifier TID). Furthermore, a time stamp, indicative of date and time of the successful blockchain registration of the file upload transfer, is stored in the file transfer log 300 for the respective data file.

In step S5, the computer system 3 or its processor 31, respectively, transmits a file transfer notification via the communication network 4 to the recipient 2 defined in step S3. For example, the file transfer notification is transmitted by email or another electronic message to the recipient 2 or its communication device, respectively. In an embodiment, the file transfer notification comprises the unique hyperlink generated for the recipient 2 to access the data file submitted by the sender 1 for transmission to the recipient 2.

In step S6, the computer system 3 or its processor 31, respectively, receives from the recipient 2 or its communication device, respectively, via the communication network 4 a file download request related to the file transfer notification. In an embodiment, the file download request is generated in response to the recipient activating, i.e. clicking on, the unique hyperlink included in the file transfer notification. Responsive to the file download request or activation of the unique hyperlink, respectively, the computer system 3 or its processor 31, respectively, determines the data file which associated with the file transfer or file download request, respectively. For example, the data file is determined based on the unique hyperlink which was accessed by the recipient and is included or linked to the unique transfer object created for the data file. In an embodiment, the recipient 2 is requested to provide further authentication information, before further processing is continued. In an embodiment, the computer system 3 or its processor 31, respectively, determines at this stage further recipient identification data, e.g. an IP address and/or the web browser used by the recipient 2 to generate the file download request or activate the unique hyperlink, respectively. The further recipient identification data is stored linked to the recipient proxy identifier of the recipient 2.

In step S7, subject to positive identification and authentication of the recipient 2, the computer system 3 or its processor 31, respectively, transmits the data file via the communication network 4 to the recipient 2 or its communication device, respectively. For download verification, a checksum of the file is computed locally at the recipient side, i.e. at the computerized communication device of the recipient 2, e.g. in the web frontend, and compared to the checksum FH stored for the file on the platform side, e.g. by the computer system 3 or its processor 31, respectively, after the download of the file has finished. As explained above, in an embodiment the checksum FH* of the downloaded data file or its file content F*, respectively, is computed as a hash, using a cryptographic one-way function, as illustrated in Figure 2. Upon positive verification of the two checksums FH, FH*, successful download is established and processing continues in step S8; otherwise an error message is indicated to the sender and/or the download of the date file is repeated.

In step S8, the computer system 3 or its processor 31, respectively, generates a recipient record RR for storage as a blockchain record 52 on the blockchain 5. As illustrated in Figure 2, the recipient record RR is generated based on the file content F* of the data file and recipient identification data associated with the recipient 2, and includes the sender transaction identifier of step S4. More specifically, the recipient record RR comprises a recipient identifier hash RIDH and the checksum FH* of the file content F* of the data file. The recipient identifier hash RIDH is generated by the computer system 3 or its processor 31, respectively, from the recipient identification data using a cryptographic one-way function (cryptographic hash function), as illustrated in Figure 2. The sender transaction identifier included in the recipient record RR corresponds to the blockchain transaction identifier T1 assigned by the blockchain system 500 to the stored sender record SR. Optionally, the recipient record RR further comprises a recipient proxy identifier RPID. The recipient proxy identifier RPID for the recipient 2, e.g. a unique alphanumeric string assigned to the recipient identification data of the recipient 2, is generated by the computer system 3 or its processor 31, respectively. In an embodiment, the recipient record RR further comprises the unique file transfer identifier TID for the respective data file. The computer system 3 or its processor 31, respectively, submits the recipient record RR to the blockchain system 500 for storage on the blockchain 5. The computer system 3 or its processor 31, respectively, uses an interface of the blockchain system 500, e.g. an API (application programming interface), to submit the recipient record RR for storage on the blockchain 5. Depending on the type of blockchain system 500 used, submitting the recipient record RR to the blockchain system 500 for storage on the blockchain 5 may invoke a smart contract of the blockchain 5 which generates a transaction and stores the recipient record RR on the blockchain 5. As illustrated schematically in Figure 2, the recipient record RR is stored on the blockchain 5, in a block 50 of the blockchain 5, as a blockchain record 52, having blockchain transaction identifier T2.

Upon successful storage of the recipient record RR on the blockchain 5, the computer system 3 or its processor 31, respectively, receives the blockchain transaction identifier T2 from the blockchain system 500. The received blockchain transaction identifier T2 is stored as a recipient transaction identifier in the data store 30 in the file transfer log 300 for the respective data file transferred. More specifically, the recipient transaction identifier, the recipient identification data RID, and the recipient record RR, are stored in the file transfer log 300 for the respective data file, linked to the previously stored file data of the respective data file (e.g. including the unique file transfer identifier TID), sender transaction identifier, sender identification data SID, and sender record SR. Furthermore, a time stamp, indicative of date and time of the successful blockchain registration of the file download transfer, is stored in the file transfer log 300 for the respective data file.

Subsequently to a successful file transfer from the sender 1 to the recipient 2, e.g. upon request by an authorized user, the computer system 3 or its processor 31, respectively, generates a proof of transfer of the file, using data stored in the file transfer log 300 for the respective file. More specifically, the computer system 3 or its processor 31, respectively, retrieves from the file transfer log 300 for the respective file the file data, the sender identification data SID, the sender transaction identifier T1, the recipient identification data RID, the recipient transaction identifier T2, and time stamps related to uploading and downloading the respective file, and includes the retrieved data in the proof of transfer. The sender transaction identifier T1 makes it possible for the user to verify the sending of the file by the sender 1, at a recorded upload time, using the sender record SR stored in the blockchain record 51 defined by the sender transaction identifier T1. The recipient transaction identifier T2 makes it possible for the user to verify the receiving of the file by the recipient 2, at a recorded download time, using the recipient record RR stored in the blockchain record 52 defined by the sender transaction identifier T2.

In the embodiments which include the unique file transfer identifier TID in the sender record SR and in the recipient record RR, and which further include the sender proxy identifier SPID of the sender 1 in the sender record SR, and the recipient proxy identifier RPID of the recipient 2 in both the sender record SR and the recipient record RR, a proof of transfer of the data file from the sender 1 to the recipient 2 can be established by matching the blockchain records 51, 52 related to the same unique file transfer identifier TID.

It should be noted that, in the description, the sequence of the steps has been presented in a specific order, one skilled in the art will understand, however, that the order of at least some of the steps could be altered, without deviating from the scope of the invention.

## Claims

1. A computer-implemented method of transferring provably a file from a sender (1) to a recipient (2), the method comprising a computer system (3) performing the steps:
receiving (S2, S3) via a communication network (4) from a communication device of the sender (1) the file and an indication of a recipient;
generating a sender record, using the file and sender identification data;
submitting (S4) the sender record to a blockchain system for storing the sender record on the blockchain (5) in a first blockchain record (51) having a first blockchain transaction identifier (T1);
transmitting (S5) via the communication network (4) a file transfer notification to the recipient (2);
transmitting (S7) the file via the communication network (4) to a communication device of the recipient (2), responsive to receiving (S6) from the communication device of the recipient (2) a file download request related to the file transfer notification;
generating a recipient record, using the file, recipient identification data, and the first blockchain transaction identifier (T1);
submitting (S8) the recipient record to the blockchain system for storing the recipient record on the blockchain (5) in a second blockchain record (52) having a second blockchain transaction identifier (T2); and
storing a file transfer log (300), the file transfer log (300) comprising file data of the file, the sender identification data, the sender record, the recipient identification data, and the recipient record linked to the first blockchain transaction identifier and to the second blockchain transaction identifier.

2. The method of claim 1, wherein the method further comprises the computer system (3) generating a unique file transfer identifier (TID), using the unique file transfer identifier (TID) for generating the sender record and for generating the recipient record, and storing the unique file transfer identifier (TID) in the file transfer log (300) linked to the first blockchain transaction identifier and to the second blockchain transaction identifier.

3. The method of one of claims 1 or 2, wherein the method further comprises the computer system (3) generating a proof of transfer of the file by retrieving the file transfer log (300) for the file, and including in the proof of transfer the file data, the sender identification data for generating the sender record, the first blockchain transaction identifier for verifying the sending of the file by the sender using the sender record stored in the first blockchain record (51) with the first blockchain transaction identifier (T1), the recipient identification data for generating the recipient record, and the second blockchain transaction identifier for verifying the receiving of the file by the recipient using the recipient record stored in the second blockchain record (52) with the second blockchain transaction identifier (T2).

4. The method of one of claims 1 to 3, wherein the method further comprises the computer system (3) generating an anonymized sender identifier linked on the computer system (3) to the sender identification data, and including the anonymized sender identifier in the sender record for storing the anonymized sender identifier in the first blockchain record (51).

5. The method of one of claims 1 to 4, wherein the method further comprises the computer system (3) generating an anonymized recipient identifier linked on the computer system (3) to the recipient identification data, and including the anonymized recipient identifier in at least one of: in the sender record for storing the anonymized recipient identifier in the first blockchain record (51) and in the recipient record for storing the anonymized recipient identifier in the second blockchain record (52).

6. The method of one of claims 1 to 5, wherein submitting (S4) the sender record to the blockchain system and submitting (S8) the recipient record to the blockchain system comprises the computer system (3) invoking a smart contract of the blockchain system.

7. The method of one of claims 1 to 6, wherein generating the sender record comprises the computer system (3) generating a file checksum by applying a hash function to the file, generating a sender identifier hash from the sender identification data, and including the file checksum and the sender identifier hash in the sender record; and generating the recipient record comprises the computer system (3) generating a recipient identifier hash from the recipient identification data, and including the file checksum and the recipient identifier hash in the recipient record.

8. The method of one of claims 1 to 7, wherein the recipient identification data comprises at least one of: an electronic mail address of the recipient, a mobile telephone number of the recipient, a user name and associated password of the recipient, a transaction authentication number assigned to the recipient, and a unique hyperlink assigned to the recipient; and the sender identification data comprises at least one of: an electronic mail address of the sender, a mobile telephone number of the sender, a user name and associated password of the sender, a transaction authentication number assigned to the sender, and a unique hyperlink assigned to the sender.

9. A computer system (3) for transferring provably a file from a sender (1) to a recipient (2), the computer system (3) comprising a processor (31) configured to perform the steps:
receiving (S2, S3) via a communication network (4) from a communication device of the sender (1) the file and an indication of a recipient;
generating a sender record, using the file and sender identification data;
submitting (S4) the sender record to a blockchain system for storing the sender record on the blockchain (5) in a first blockchain record (51) having a first blockchain transaction identifier (T1);
transmitting (S5) via the communication network (4) a file transfer notification to the recipient (2);
transmitting (S7) the file via the communication network (4) to a communication device of the recipient (2), responsive to receiving (S6) from the communication device of the recipient (2) a file download request related to the file transfer notification;
generating a recipient record, using the file, recipient identification data, and the first blockchain transaction identifier (T1);
submitting (S8) the recipient record to the blockchain system for storing the recipient record on the blockchain (5) in a second blockchain record (52) having a second blockchain transaction identifier (T2); and
storing a file transfer log (300), the file transfer log (300) comprising file data of the file, the sender identification data, the sender record, the recipient identification data, and the recipient record linked to the first blockchain transaction identifier and to the second blockchain transaction identifier.

10. The computer system (3) of claim 9, wherein the processor (31) is further configured to generate a unique file transfer identifier (TID), use the unique file transfer identifier (TID) for generating the sender record and for generating the recipient record, and store the unique file transfer identifier (TID) in the file transfer log (300) linked to the first blockchain transaction identifier and to the second blockchain transaction identifier.

11. The computer system (3) of one of claims 9 or 10, wherein the processor (31) is further configured to generate a proof of transfer of the file by retrieving the file transfer log (300) for the file, and including in the proof of transfer the file data, the sender identification data for generating the sender record, the first blockchain transaction identifier for verifying the sending of the file by the sender using the sender record stored in the first blockchain record (51) with the first blockchain transaction identifier (T1), the recipient identification data for generating the recipient record, and the second blockchain transaction identifier for verifying the receiving of the file by the recipient using the recipient record stored in the second blockchain record (52) with the second blockchain transaction identifier (T2).

12. The computer system (3) of one of claims 9 to 11, wherein the processor (31) is further configured to generate an anonymized sender identifier linked on the computer system (3) to the sender identification data, include the anonymized sender identifier in the sender record for storing the anonymized sender identifier in the first blockchain record (51), generate an anonymized recipient identifier linked on the computer system (3) to the recipient identification data, and include the anonymized recipient identifier in at least one of: in the sender record for storing the anonymized recipient identifier in the first blockchain record (51) and in the recipient record for storing the anonymized recipient identifier in the second blockchain record (52).

13. The computer system (3) of one of claims 9 to 12, wherein the processor (31) is further configured to submit (S4) the sender record to the blockchain system and to submit (S8) the recipient record to the blockchain system by invoking a smart contract of the blockchain system.

14. The computer system (3) of one of claims 9 to 13, wherein the processor (31) is configured to generate the sender record by generating a file checksum by applying a hash function to the file, generating a sender identifier hash from the sender identification data, and including the file checksum and the sender identifier hash in the sender record; and to generate the recipient record by generating a recipient identifier hash from the recipient identification data, and including the file checksum and the recipient identifier hash in the recipient record.

15. Computer program product comprising a non-transitory computer-readable medium having stored thereon computer program code configured to control a processor (31) of a computer system (3) such that the computer system (3) transfers provably a file from a sender (1) to a recipient (2) by performing the method of one of the claims 1 to 8.

## Patentansprüche

1. Computerimplementiertes Verfahren zum nachweisbaren Übertragen einer Datei von einem Absender (1) an einen Empfänger (2), wobei das Verfahren ein Computersystem (3) umfasst, das die folgenden Schritte ausführt:
Empfangen (S2, S3) der Datei und einer Angabe eines Empfängers über ein Kommunikationsnetzwerk (4) von einer Kommunikationsvorrichtung des Absenders (1);
Erzeugen eines Absenderdatensatzes unter Verwendung der Datei und der Absenderidentifikationsdaten;
Einreichen (S4) des Absenderdatensatzes an ein Blockchain-System zum Speichern des Absenderdatensatzes in der Blockchain (5) in einem ersten Blockchain-Datensatz (51) mit einer ersten Blockchain-Transaktionskennung (T1);
Übermitteln (S5) einer Dateiübertragungsbenachrichtigung über das Kommunikationsnetzwerk (4) an den Empfänger (2);
Übermitteln (S7) der Datei über das Kommunikationsnetzwerk (4) an eine Kommunikationsvorrichtung des Empfängers (2) als Reaktion auf das Empfangen (S6) einer Datei-Download-Anforderung, die sich auf die Dateiübertragungsbenachrichtigung bezieht, von der Kommunikationsvorrichtung des Empfängers (2);
Erzeugen eines Empfängerdatensatzes unter Verwendung der Datei, der Empfängeridentifikationsdaten und der ersten Blockchain-Transaktionskennung (T1);
Einreichen (S8) des Empfängerdatensatzes an das Blockchain-System zum Speichern des Empfängerdatensatzes in der Blockchain (5) in einem zweiten Blockchain-Datensatz (52) mit einer zweiten Blockchain-Transaktionskennung (T2); und
Speichern eines Dateiübertragungsprotokolls (300), wobei das Dateiübertragungsprotokoll (300) Dateidaten der Datei, die Absenderidentifikationsdaten, den Absenderdatensatz, die Empfängeridentifikationsdaten und den Empfängerdatensatz umfasst, die mit der ersten Blockchain-Transaktionskennung und der zweiten Blockchain-Transaktionskennung verknüpft sind.

2. Verfahren nach Anspruch 1, wobei das Verfahren ferner umfasst, dass das Computersystem (3) eine eindeutige Dateiübertragungskennung (TID) erzeugt, die eindeutige Dateiübertragungskennung (TID) zum Erzeugen des Absenderdatensatzes und zum Erzeugen des Empfängerdatensatzes verwendet und die eindeutige Dateiübertragungskennung (TID) in dem Dateiübertragungsprotokoll (300) speichert, das mit der ersten Blockchain-Transaktionskennung und mit der zweiten Blockchain-Transaktionskennung verknüpft ist.

3. Verfahren nach einem der Ansprüche 1 oder 2, wobei das Verfahren ferner umfasst, dass das Computersystem (3) einen Nachweis der Übertragung der Datei erzeugt, indem es das Dateiübertragungsprotokoll (300) für die Datei abruft, und in den Nachweis der Übertragung die Dateidaten, die Absenderidentifikationsdaten zum Erzeugen des Absenderdatensatzes, die ersten Blockchain-Transaktionskennung zum Verifizieren des Sendens der Datei durch den Absender unter Verwendung des in dem ersten Blockchain-Datensatz (51) gespeicherten Absenderdatensatzes mit der ersten Blockchain-Transaktionskennung (T1), die Empfängeridentifikationsdaten zum Erzeugen des Empfängerdatensatzes und die zweite Blockchain-Transaktionskennung zum Verifizieren des Empfangens der Datei durch den Empfänger unter Verwendung des in dem zweiten Blockchain-Datensatz (52) gespeicherten Empfängerdatensatzes mit der zweiten Blockchain-Transaktionskennung (T2) aufnimmt.

4. Verfahren nach einem der Ansprüche 1 bis 3, wobei das Verfahren ferner umfasst, dass das Computersystem (3) eine anonymisierte Absenderkennung erzeugt, die auf dem Computersystem (3) mit den Absenderidentifikationsdaten verknüpft ist, und die anonymisierte Absenderkennung in den Absenderdatensatz zum Speichern der anonymisierten Absenderkennung in dem ersten Blockchain-Datensatz (51) aufnimmt.

5. Verfahren nach einem der Ansprüche 1 bis 4, wobei das Verfahren ferner umfasst, dass das Computersystem (3) eine anonymisierte Empfänger-Kennung erzeugt, die auf dem Computersystem (3) mit den Empfänger-Identifikationsdaten verknüpft ist, und die anonymisierte Empfänger-Kennung in mindestens einem der folgenden Elemente aufnimmt: in dem Absenderdatensatz zum Speichern der anonymisierten Empfänger-Kennung in dem ersten Blockchain-Datensatz (51) und in dem Empfänger-Datensatz zum Speichern der anonymisierten Empfänger-Kennung in dem zweiten Blockchain-Datensatz (52).

6. Verfahren nach einem der Ansprüche 1 bis 5, wobei das Einreichen (S4) des Absenderdatensatzes in das Blockchain-System und das Einreichen (S8) des Empfängerdatensatzes in das Blockchain-System umfasst, dass das Computersystem (3) einen Smart Contract des Blockchain-Systems aufruft.

7. Verfahren nach einem der Ansprüche 1 bis 6, wobei das Erzeugen des Absenderdatensatzes umfasst, dass das Computersystem (3) eine Dateiprüfsumme erzeugt, indem es eine Hash-Funktion auf die Datei anwendet, einen Absenderkennungs-Hash aus den Absenderidentifikationsdaten erzeugt und die Dateiprüfsumme und den Absenderkennungs-Hash in den Absenderdatensatz aufnimmt; und das Erzeugen des Empfängerdatensatzes umfasst, dass das Computersystem (3) einen Empfängeridentifikator-Hash aus den Empfängeridentifikationsdaten erzeugt und die Datei-Prüfsumme und den Empfängeridentifikator-Hash in den Empfängerdatensatz aufnimmt.

8. Verfahren nach einem der Ansprüche 1 bis 7, wobei die Empfängeridentifikationsdaten mindestens eines der folgenden Elemente umfassen: eine E-Mail-Adresse des Empfängers, eine Mobiltelefonnummer des Empfängers, einen Benutzernamen und ein zugehöriges Passwort des Empfängers, eine dem Empfänger zugewiesene Transaktionsauthentifizierungsnummer und einen dem Empfänger zugewiesenen eindeutigen Hyperlink; und die Absenderidentifikationsdaten mindestens eines der folgenden Elemente umfassen: eine E-Mail-Adresse des Absenders, eine Mobiltelefonnummer des Absenders, einen Benutzernamen und ein zugehöriges Passwort des Absenders, eine dem Absender zugewiesene Transaktionsauthentifizierungsnummer und einen dem Absender zugewiesenen eindeutigen Hyperlink.

9. Computersystem (3) zum nachweisbaren Übertragen einer Datei von einem Absender (1) zu einem Empfänger (2), wobei das Computersystem (3) einen Prozessor (31) umfasst, der dazu ausgelegt ist, die folgenden Schritte auszuführen:
Empfangen (S2, S3) der Datei und einer Angabe eines Empfängers über ein Kommunikationsnetzwerk (4) von einer Kommunikationsvorrichtung des Absenders (1);
Erzeugen eines Absenderdatensatzes unter Verwendung der Datei und der Absenderidentifikationsdaten;
Einreichen (S4) des Absenderdatensatzes an ein Blockchain-System zum Speichern des Absenderdatensatzes in der Blockchain (5) in einem ersten Blockchain-Datensatz (51) mit einer ersten Blockchain-Transaktionskennung (T1);
Übermitteln (S5) einer Dateiübertragungsbenachrichtigung über das Kommunikationsnetzwerk (4) an den Empfänger (2);
Übermitteln (S7) der Datei über das Kommunikationsnetzwerk (4) an eine Kommunikationsvorrichtung des Empfängers (2) als Antwort auf das Empfangen (S6) einer Datei-Download-Anforderung, die sich auf die Dateiübertragungsbenachrichtigung bezieht, von der Kommunikationsvorrichtung des Empfängers (2);
Erzeugen eines Empfängerdatensatzes unter Verwendung der Datei, der Empfängeridentifikationsdaten und der ersten Blockchain-Transaktionskennung (T1);
Einreichen (S8) des Empfängerdatensatzes an das Blockchain-System zum Speichern des Empfängerdatensatzes in der Blockchain (5) in einem zweiten Blockchain-Datensatz (52) mit einer zweiten Blockchain-Transaktionskennung (T2); und
Speichern eines Dateiübertragungsprotokolls (300), wobei das Dateiübertragungsprotokoll (300) Dateidaten der Datei, die Absenderidentifikationsdaten, den Absenderdatensatz, die Empfängeridentifikationsdaten und den Empfängerdatensatz umfasst, die mit dem ersten Blockchain-Transaktionskennzeichen und dem zweiten Blockchain-Transaktionskennzeichen verknüpft sind.

10. Computersystem (3) nach Anspruch 9, wobei der Prozessor (31) ferner dazu ausgelegt ist, eine eindeutige Dateiübertragungskennung (TID) zu erzeugen, die eindeutige Dateiübertragungskennung (TID) zum Erzeugen des Absenderdatensatzes und zum Erzeugen des Empfängerdatensatzes zu verwenden und die eindeutige Dateiübertragungskennung (TID) in dem Dateiübertragungsprotokoll (300) zu speichern, das mit der ersten Blockchain-Transaktionskennung und der zweiten Blockchain-Transaktionskennung verknüpft ist.

11. Computersystem (3) nach einem der Ansprüche 9 oder 10, wobei der Prozessor (31) ferner dazu ausgelegt ist, einen Übertragungsnachweis der Datei zu erzeugen, indem er das Dateiübertragungsprotokoll (300) für die Datei abruft und in den Übertragungsnachweis die Dateidaten, die Absenderidentifikationsdaten zum Erzeugen des Absenderdatensatzes, die ersten Blockchain-Transaktionskennung zum Verifizieren des Sendens der Datei durch den Absender unter Verwendung des in dem ersten Blockchain-Datensatz (51) gespeicherten Absenderdatensatzes mit der ersten Blockchain-Transaktionskennung (T1), die Empfängeridentifikationsdaten zum Erzeugen des Empfängerdatensatzes und die zweite Blockchain-Transaktionskennung zum Verifizieren des Empfangens der Datei durch den Empfänger unter Verwendung des in dem zweiten Blockchain-Datensatz (52) gespeicherten Empfängerdatensatzes mit der zweiten Blockchain-Transaktionskennung (T2) aufnimmt.

12. Computersystem (3) nach einem der Ansprüche 9 bis 11, wobei der Prozessor (31) ferner dazu ausgelegt ist, eine anonymisierte Absenderkennung zu erzeugen, die auf dem Computersystem (3) mit den Absenderidentifikationsdaten verknüpft ist, die anonymisierte Absenderkennung in den Absenderdatensatz zum Speichern der anonymisierten Absenderkennung im ersten Blockchain-Datensatz (51) aufzunehmen, eine anonymisierte Empfänger-Kennung zu erzeugen, die auf dem Computersystem (3) mit den Empfänger-Identifikationsdaten verknüpft ist, und die anonymisierte Empfänger-Kennung in mindestens einem der folgenden Elemente aufzunehmen: in dem Absenderdatensatz zum Speichern der anonymisierten Empfänger-Kennung in dem ersten Blockchain-Datensatz (51) und in dem Empfänger-Datensatz zum Speichern der anonymisierten Empfänger-Kennung in dem zweiten Blockchain-Datensatz (52).

13. Computersystem (3) nach einem der Ansprüche 9 bis 12, wobei der Prozessor (31) ferner dazu ausgelegt ist, den Absenderdatensatz an das Blockchain-System einzureichen (S4) und den Empfängerdatensatz an das Blockchain-System einzureichen (S8), indem ein Smart Contract des Blockchain-Systems aufgerufen wird.

14. Computersystem (3) nach einem der Ansprüche 9 bis 13, wobei der Prozessor (31) dazu ausgelegt ist, den Absenderdatensatz zu erzeugen, indem er eine Dateiprüfsumme durch Anwenden einer Hash-Funktion auf die Datei erzeugt, einen Absenderkennungs-Hash aus den Absenderidentifikationsdaten erzeugt und die Dateiprüfsumme und den Absenderkennungs-Hash in den Absenderdatensatz aufnimmt; und zum Erzeugen des Empfängerdatensatzes durch Erzeugen eines Empfängeridentifikator-Hash aus den Empfängeridentifikationsdaten und Aufnehmen der Datei-Prüfsumme und des Empfängeridentifikator-Hash in dem Empfängerdatensatz.

15. Computerprogrammprodukt, umfassend ein nicht-transitorisches, computerlesbares Medium, auf dem ein Computerprogrammcode gespeichert ist, der dazu ausgelegt ist, einen Prozessor (31) eines Computersystems (3) so zu steuern, dass das Computersystem (3) eine Datei von einem Absender (1) an einen Empfänger (2) nachweisbar überträgt, indem es das Verfahren nach einem der Ansprüche 1 bis 8 ausführt.

## Revendications

1. Procédé mis en oeuvre par ordinateur pour transférer de manière vérifiable un fichier d'un expéditeur (1) à un destinataire (2), le procédé comprenant un système informatique (3) exécutant les étapes suivantes :
recevoir (S2, S3) via un réseau de communication (4) à partir d'un dispositif de communication de l'expéditeur (1) le fichier et une indication d'un destinataire ;
générer un enregistrement d'expéditeur, en utilisant le fichier et les données d'identification de l'expéditeur ;
soumettre (S4) l'enregistrement de l'expéditeur à un système de chaîne de blocs afin de stocker l'enregistrement de l'expéditeur sur la chaîne de blocs (5) dans un premier enregistrement de chaîne de blocs (51) comportant un premier identifiant de transaction de chaîne de blocs (T1) ;
transmettre (S5) via le réseau de communication (4) une notification de transfert de fichier au destinataire (2) ;
transmettre (S7) le fichier via le réseau de communication (4) à un dispositif de communication du destinataire (2), en réponse à la réception (S6) du dispositif de communication du destinataire (2) d'une demande de téléchargement de fichier liée à la notification de transfert de fichier ;
générer un enregistrement destinataire, en utilisant le fichier, les données d'identification du destinataire et le premier identifiant de transaction de la chaîne de blocs (T1) ;
soumettre (S8) l'enregistrement du destinataire au système de chaîne de blocs afin de stocker l'enregistrement du destinataire sur la chaîne de blocs (5) dans un deuxième enregistrement de chaîne de blocs (52) comportant un deuxième identifiant de transaction de chaîne de blocs (T2) ; et
stocker un journal de transfert de fichiers (300), le journal de transfert de fichiers (300) comprenant les données de fichier du fichier, les données d'identification de l'expéditeur, l'enregistrement de l'expéditeur, les données d'identification du destinataire et l'enregistrement du destinataire liés au premier identifiant de transaction de la chaîne de blocs et au deuxième identifiant de transaction de la chaîne de blocs.

2. Procédé selon la revendication 1, dans lequel le procédé comprend en outre le système informatique (3) générant un identifiant de transfert de fichier unique (TID), utilisant l'identifiant de transfert de fichier unique (TID) pour générer l'enregistrement de l'expéditeur et pour générer l'enregistrement du destinataire, et stockant l'identifiant de transfert de fichier unique (TID) dans le journal de transfert de fichiers (300) lié au premier identifiant de transaction de chaîne de blocs et au deuxième identifiant de transaction de chaîne de blocs.

3. Procédé selon l'une des revendications 1 ou 2, dans lequel le procédé comprend en outre le système informatique (3) générant une preuve de transfert du fichier en récupérant le journal de transfert de fichiers (300) pour le fichier, et incluant dans la preuve de transfert les données de fichier, les données d'identification de l'expéditeur pour générer l'enregistrement de l'expéditeur, le premier identifiant de transaction de la chaîne de blocs pour vérifier l'envoi du fichier par l'expéditeur à l'aide de l'enregistrement de l'expéditeur stocké dans le premier enregistrement de la chaîne de blocs (51) avec le premier identifiant de transaction de la chaîne de blocs (T1), les données d'identification du destinataire pour générer l'enregistrement du destinataire, et le deuxième identifiant de transaction de la chaîne de blocs pour vérifier la réception du fichier par le destinataire à l'aide de l'enregistrement du destinataire stocké dans le deuxième enregistrement de la chaîne de blocs (52) avec le deuxième identifiant de transaction de la chaîne de blocs (T2).

4. Procédé selon l'une des revendications 1 à 3, dans lequel le procédé comprend en outre le système informatique (3) générant un identifiant d'expéditeur anonymisé lié sur le système informatique (3) aux données d'identification de l'expéditeur, et incluant l'identifiant d'expéditeur anonymisé dans l'enregistrement de l'expéditeur pour stocker l'identifiant d'expéditeur anonymisé dans le premier enregistrement de la chaîne de blocs (51).

5. Procédé selon l'une des revendications 1 à 4, dans lequel le procédé comprend en outre le système informatique (3) générant un identifiant de destinataire anonymisé lié sur le système informatique (3) aux données d'identification du destinataire, et incluant l'identifiant de destinataire anonymisé dans au moins l'un des éléments suivants : dans l'enregistrement de l'expéditeur pour stocker l'identifiant de destinataire anonymisé dans le premier enregistrement de la chaîne de blocs (51) et dans l'enregistrement du destinataire pour stocker l'identifiant de destinataire anonymisé dans le deuxième enregistrement de la chaîne de blocs (52).

6. Procédé selon l'une des revendications 1 à 5, dans lequel la soumission (S4) de l'enregistrement expéditeur au système de chaîne de blocs et la soumission (S8) de l'enregistrement destinataire au système de chaîne de blocs comprennent le système informatique (3) invoquant un contrat intelligent du système de chaîne de blocs.

7. Procédé selon l'une des revendications 1 à 6, dans lequel la génération de l'enregistrement d'expéditeur comprend le système informatique (3) générant une somme de contrôle de fichier en appliquant une fonction de hachage au fichier, générant un hachage d'identifiant d'expéditeur à partir des données d'identification d'expéditeur, et incluant la somme de contrôle de fichier et le hachage d'identifiant d'expéditeur dans l'enregistrement d'expéditeur ; et la génération de l'enregistrement destinataire comprend le système informatique (3) générant un hachage d'identifiant destinataire à partir des données d'identification destinataire, et incluant la somme de contrôle du fichier et le hachage d'identifiant destinataire dans l'enregistrement destinataire.

8. Procédé selon l'une des revendications 1 à 7, dans lequel les données d'identification du destinataire comprennent au moins l'un des éléments suivants : une adresse électronique du destinataire, un numéro de téléphone mobile du destinataire, un nom d'utilisateur et un mot de passe associé du destinataire, un numéro d'authentification de transaction attribué au destinataire, et un lien hypertexte unique attribué au destinataire ; et les données d'identification de l'expéditeur comprennent au moins l'un des éléments suivants : une adresse électronique de l'expéditeur, un numéro de téléphone mobile de l'expéditeur, un nom d'utilisateur et un mot de passe associé de l'expéditeur, un numéro d'authentification de transaction attribué à l'expéditeur, et un lien hypertexte unique attribué à l'expéditeur.

9. Système informatique (3) pour transférer de manière vérifiable un fichier d'un expéditeur (1) à un destinataire (2), le système informatique (3) comprenant un processeur (31) configuré pour exécuter les étapes suivantes :
recevoir (S2, S3) via un réseau de communication (4) à partir d'un dispositif de communication de l'expéditeur (1) le fichier et une indication d'un destinataire ;
générer un enregistrement d'expéditeur, en utilisant le fichier et les données d'identification de l'expéditeur ;
soumettre (S4) l'enregistrement d'expéditeur à un système de chaîne de blocs afin de stocker l'enregistrement d'expéditeur sur la chaîne de blocs (5) dans un premier enregistrement de chaîne de blocs (51) comportant un premier identifiant de transaction de chaîne de blocs (T1) ;
transmettre (S5) via le réseau de communication (4) une notification de transfert de fichier au destinataire (2) ;
transmettre (S7) le fichier via le réseau de communication (4) à un dispositif de communication du destinataire (2), en réponse à la réception (S6) du dispositif de communication du destinataire (2) d'une demande de téléchargement de fichier liée à la notification de transfert de fichier ;
générer un enregistrement destinataire, en utilisant le fichier, les données d'identification du destinataire et le premier identifiant de transaction de la chaîne de blocs (T1) ;
soumettre (S8) l'enregistrement du destinataire au système de chaîne de blocs afin de stocker l'enregistrement du destinataire sur la chaîne de blocs (5) dans un deuxième enregistrement de chaîne de blocs (52) comportant un deuxième identifiant de transaction de chaîne de blocs (T2) ; et
stocker un journal de transfert de fichiers (300), le journal de transfert de fichiers (300) comprenant les données de fichier du fichier, les données d'identification de l'expéditeur, l'enregistrement de l'expéditeur, les données d'identification du destinataire et l'enregistrement du destinataire lié au premier identifiant de transaction de la chaîne de blocs et au deuxième identifiant de transaction de la chaîne de blocs.

10. Système informatique (3) selon la revendication 9, dans lequel le processeur (31) est en outre configuré pour générer un identifiant de transfert de fichier unique (TID), utiliser l'identifiant de transfert de fichier unique (TID) pour générer l'enregistrement de l'expéditeur et pour générer l'enregistrement du destinataire, et stocker l'identifiant de transfert de fichier unique (TID) dans le journal de transfert de fichiers (300) lié au premier identifiant de transaction de la chaîne de blocs et au deuxième identifiant de transaction de la chaîne de blocs.

11. Système informatique (3) selon l'une des revendications 9 ou 10, dans lequel le processeur (31) est en outre configuré pour générer une preuve de transfert du fichier en récupérant le journal de transfert de fichiers (300) pour le fichier, et en incluant dans la preuve de transfert les données de fichier, les données d'identification de l'expéditeur pour générer l'enregistrement de l'expéditeur, le premier identifiant de transaction de la chaîne de blocs pour vérifier l'envoi du fichier par l'expéditeur à l'aide de l'enregistrement de l'expéditeur stocké dans le premier enregistrement de la chaîne de blocs (51) avec le premier identifiant de transaction de la chaîne de blocs (T1), les données d'identification du destinataire pour générer l'enregistrement du destinataire, et le deuxième identifiant de transaction de la chaîne de blocs pour vérifier la réception du fichier par le destinataire à l'aide de l'enregistrement du destinataire stocké dans le deuxième enregistrement de la chaîne de blocs (52) avec le deuxième identifiant de transaction de la chaîne de blocs (T2).

12. Système informatique (3) selon l'une des revendications 9 à 11, dans lequel le processeur (31) est en outre configuré pour générer un identifiant d'expéditeur anonymisé lié sur le système informatique (3) aux données d'identification de l'expéditeur, inclure l'identifiant d'expéditeur anonymisé dans l'enregistrement de l'expéditeur pour stocker l'identifiant d'expéditeur anonymisé dans le premier enregistrement de la chaîne de blocs (51), générer un identifiant de destinataire anonymisé lié sur le système informatique (3) aux données d'identification du destinataire, et inclure l'identifiant de destinataire anonymisé dans au moins l'un des éléments suivants : dans l'enregistrement de l'expéditeur pour stocker l'identifiant de destinataire anonymisé dans le premier enregistrement de la chaîne de blocs (51) et dans l'enregistrement du destinataire pour stocker l'identifiant de destinataire anonymisé dans le deuxième enregistrement de la chaîne de blocs (52).

13. Système informatique (3) selon l'une des revendications 9 à 12, dans lequel le processeur (31) est en outre configuré pour soumettre (S4) l'enregistrement d'expéditeur au système de chaîne de blocs et pour soumettre (S8) l'enregistrement de destinataire au système de chaîne de blocs en invoquant un contrat intelligent du système de chaîne de blocs.

14. Système informatique (3) selon l'une des revendications 9 à 13, dans lequel le processeur (31) est configuré pour générer l'enregistrement expéditeur en générant une somme de contrôle de fichier en appliquant une fonction de hachage au fichier, en générant un hachage d'identifiant expéditeur à partir des données d'identification expéditeur, et en incluant la somme de contrôle de fichier et le hachage d'identifiant expéditeur dans l'enregistrement expéditeur ; et pour générer l'enregistrement du destinataire en générant un hachage de l'identifiant du destinataire à partir des données d'identification du destinataire, et en incluant la somme de contrôle du fichier et le hachage de l'identifiant du destinataire dans l'enregistrement du destinataire.

15. Produit programme d'ordinateur comprenant un support non transitoire lisible par ordinateur sur lequel est stocké un code de programme d'ordinateur configuré pour commander un processeur (31) d'un système informatique (3) de telle sorte que le système informatique (3) transfère de manière vérifiable un fichier d'un expéditeur (1) à un destinataire (2) en exécutant le procédé de l'une des revendications 1 à 8.
